# EUROPÄISCHE PATENTSCHRIFT

(11) **EP 1 578 547 B1**
(45) Veröffentlichungstag und Bekanntmachung des Hinweises auf die Patenterteilung: **22.09.2010**
(21) Anmeldenummer: 03813866.5
(22) Anmeldetag: 22.12.2003
(51) Int. Cl.: B21D 26/02, C21D 7/12, C21D 8/02

(54) **VERFAHREN ZUR STEIGERUNG EINER DAUERFESTIGKEIT EINES MIT WENIGSTENS EINEM HOHLRAUM AUSGEBILDETEN METALLISCHEN BAUTEILES UNTER ZYKLISCHER INNENDRUCKBELASTUNG**
METHOD FOR INCREASING A FATIGUE STRENGTH OF A METALLIC COMPONENT, WHICH IS PROVIDED WITH AT LEAST ONE CAVITY, WHILE SUBJECTING IT TO A CYCLIC INNER PRESSURE LOAD
PROCEDE POUR ACCROITRE LA RESISTANCE A LA FATIGUE D'UN ELEMENT METALLIQUE REALISE AVEC AU MOINS UNE CAVITE, SOUMIS A UNE CHARGE DE PRESSION INTERIEURE CYCLIQUE

(30) Priorität: 23.12.2002 DE 10260856
(43) Veröffentlichungstag der Anmeldung: 28.09.2005
(73) Patentinhaber: ROBERT BOSCH GMBH, 70442 Stuttgart (DE)
(72) Erfinder: WILHELM, Manfred, 71735 Eberdingen (DE); FABER, Heinrich, 70469 Stuttgart (DE); RAU, Yao, 70569 Stuttgart (DE); BACHER-HOECHST, Manfred, 70193 Stuttgart (DE); MITSCHELEN, Reiner, 71272 Renningen (DE)
(86) Internationale Anmeldenummer: PCT/DE2003/004231
(87) Internationale Veröffentlichungsnummer: WO 2004/058482

(56) Entgegenhaltungen:
- DE-A- 10 000 796
- GB-A- 2 155 836
- US-A- 3 438 113
- US-A1- 2002 069 688
- US-B1- 6 491 182

## Beschreibung

### Stand der Technik

Die Erfindung betrifft ein Verfahren zur Steigerung einer Dauerfestigkeit eines mit wenigstens einem Hohlraum ausgebildeten metallischen Bauteiles, gemäß dem Oberbegriff des Anspruchs 1.

Aus der Praxis sind Verfahren bekannt, bei welchen ein Innenraum bzw. Hohlraum eines metallischen Bauteiles während einer Druckbeaufschlagungsphase einmalig mit einem Innendruck beaufschlagt wird, der wesentlich über einer Betriebsbelastung liegt. Bei entsprechend ausgewählter Höhe des Innendruckes werden in einem derartig behandelten Bauteil nach Absenken des Druckes in der Randschicht des Innenraums bzw. Hohlraums des Bauteiles Druckeigenspannungen erzeugt. Die Druckeigenspannungen werden durch eine Teilplastizierung, d. h. bleibende, teilplastische Verformungen, verursacht. Durch diese Druckeigenspannungen wird eine mechanische Belastbarkeit eines Bauteiles, welches mit zyklischen bzw. zeitlich variablen Innendrücken beaufschlagt wird, erheblich erhöht. Diese bekannten Verfahren, welche auch als Autofrettageverfahren bezeichnet werden, werden daher zur Vergrößerung der Leistungsfähigkeit hoch beanspruchter Stahl-Bauteile eingesetzt.

US-A-3438113 beschreibt ein Verfahren zu Durchführung einer Autofrettage bei der Herstellung eines im Betrieb druckbeaufschlagten Hohlbehälter, wobei die für die Autofrettage notwendige Druckbeaufschlagung in ihrem Druckwert reduziert werden kann. Hierzu wird der Hohlraum für einige Minuten mit einem Druck von 15000 p.s.i beaufschlagt und der Behälter gleichzeitig auf eine Temperatur von 1000 F erwärmt. Die Autofrettagereaktion erfolgt dann ab Erreichen eines entsprechend hohen Temperaturwertes. Anschließend werden der Beaufschlagungsdruck und die Behältertemperatur bis auf die der Umgebung abgesenkt.

Weitere Verfestigungsprozesse zur Erzeugung von Druckeigenspannungen in metallischen Bauteilen stellen beispielsweise Kugelstrahlverfahren oder Festwalzverfahren dar. Diese werden auch bei einer gegenüber einer Raumtemperatur erhöhten Prozeßtemperatur bzw. Bauteiltemperatur durchgeführt, um die Stabilität der Druckeigenspannungen im Betrieb eines Bauteiles bei zeitlich veränderlicher Innendruckbelastung zu erhöhen und damit auch die Widerstandsfähigkeit gegen einen Schwingbruch erheblich zu steigern.

Nachteilig dabei ist jedoch, daß bei den letztgenannten Verfestigungsverfahren komplexe Bauteilgeometrien und Innenoberflächen nur in ungenügender Art und Weise bearbeitet bzw. verfestigt werden können.

Aufgabe der vorliegenden Erfindung ist es, ein Verfahren, zur Verfügung zu stellen, mittels dem Druckeigenspannungen in Bauteilen von beliebiger Geometrie mit hoher Stabilität erzeugt werden können.

Erfindungsgemäß wird diese Aufgabe mit einem Verfahren gemäß den Merkmalen des Patentanspruches 1 gelöst.

### Vorteile der Erfindung

Mit dem Verfahren zur Steigerung einer Dauerfestigkeit eines mit wenigstens einem Hohlraum ausgebildeten metallischen Bauteiles, insbesondere eines Bauteiles eines Einspritzsystemes für Fahrzeuge, mit den Merkmalen des Patentanspruches 1 wird eine erheblich verbesserte Widerstandsfähigkeit bzw. Schwingfestigkeit eines metallischen Bauteiles gegenüber hohen Betriebsdrücken und aufgrund von großen Druckschwankungen erzeugten Belastungen erzielt.

Dies wird dadurch erreicht, daß ein Bauteil während einer Druckbeaufschlagungsphase in seinem Innenraum mit einem derartigen Druck beaufschlagt wird, daß das Bauteil wenigstens abschnittsweise zur Erzeugung von Druckeigenspannungen im Bauteil teilplastisch verfolgt wird. Vor der Druckbeaufschlasungsphase wird zumindest eine Temperaturbehandluncsphase durchgeführt, bei der das Bauteil auf eine Bauteiltemperatur erwärmt, die größer als eine Raumtemperatur ist, wodurch die Widerstandsfähigkeit bzw. Schwingfestigkeit eines Bauteiles gegenüber aufgrund von großen Druckschwankungen erzeugten Belastungen noch weiter erhöht wird. Dies resultiert daraus, daß durch die Temperaturbehandlungsphase physikalische Effekte der teilplastischen Verformung im Bauteil, die die Verbesserung der Dauerfestigkeit eines mit dem Verfahren nach der Erfindung behandelten Bauteiles bewirken, dahingehend begünstigt werden, daß die erzeugten Druckeigenspannungen vorteilhafterweise stabilisiert werden.

Gemäß dem erfindungsgemäßen Verfahren wird ein metallisches Bauteil zunächst während einer Druckbeaufschlagungsphase wenigstens bereichsweise, d. h. vorzugsweise in hochbelasteten Bereichen, zur Erzeugung von Druckeigenspannungen teilplastisch verformt. Vor die Druckbeaufschlagungsphase wird das Bauteil in einer Temperaturbehandlungsphase auf eine Temperatur gebracht, die größer als die Raumtemperatur ist. Dadurch wird eine erheblich verbesserte Widerstandsfähigkeit bzw. Schwingfestigkeit des Bauteiles gegenüber einem lediglich bei Raumtemperatur plastizierten Bauteil erzielt.

Die Druckbeaufschlagungsphase wird dabei bei einer Bauteiltemperatur durchgeführt die auf 200°C bis 400°C gehalten wird. Damit wird ein Bauteil mit einer erheblich verbesserten Widerstandsfähigkeit hergestellt, da die während der Druckbeaufschlagungsphase erzeugten Druckeigenspannungen eine höhere Stabilität aufweisen.

Mit dem Verfahren nach der Erfindung besteht insbesondere die Möglichkeit, die Schwingfestigkeit von Bauteilen mit komplexer Bauteilgeometrie ohne hohen apparativen Aufwand zu verbessern. Ein bevorzugtes Anwendungsgebiet sind dabei Druck führende Rohre oder komplexe Bauteile der Dieseleinspritztechnik und Benzineinspritztechnik, wie beispielsweise Einspritzleitungen und Bauteile von Pumpen, Injektoren und Verteilern.

Weitere Vorteile und vorteilhafte Ausgestaltungen des Gegenstandes nach der Erfindung sind der Beschreibung, der Zeichnung und den Patentansprüchen entnehmbar.

### Zeichnung

In der Zeichnung ist ein Ausführungsbeispiel der Erfindung anhand eines rohrförmigen Bauteiles mit Darstellungen vor und nach der Durchführung des Verfahrens nach der Erfindung stark schematisiert gezeigt, welches in der nachfolgenden Beschreibung näher erläutert wird. Es zeigen
Figur 1a im Querschnitt ein rohrförmiges Bauteil eines Kraftstoffeinspritzsystemes vor der Durchführung des erfindungsgemäßen Verfahrens;
Figur 1b das Bauteil gemäß Figur 1a nach der Durchführung des Verfahrens nach der Erfindung;
Figur 1c eine schematische Darstellung des Bauteils gemäß Figur 1a und Figur 1b im Längsschnitt;
Figur 1d einen Eigenspannungsverlauf im Bauteil gemäß den Figuren 1a bis 1c nach der Durchführung des erfindungsgemäßen Verfahrens; und
Figur 2 eine Vorrichtung zur Durchführung des Verfahrens nach der Erfindung.

### Beschreibung des Ausführungsbeispiels

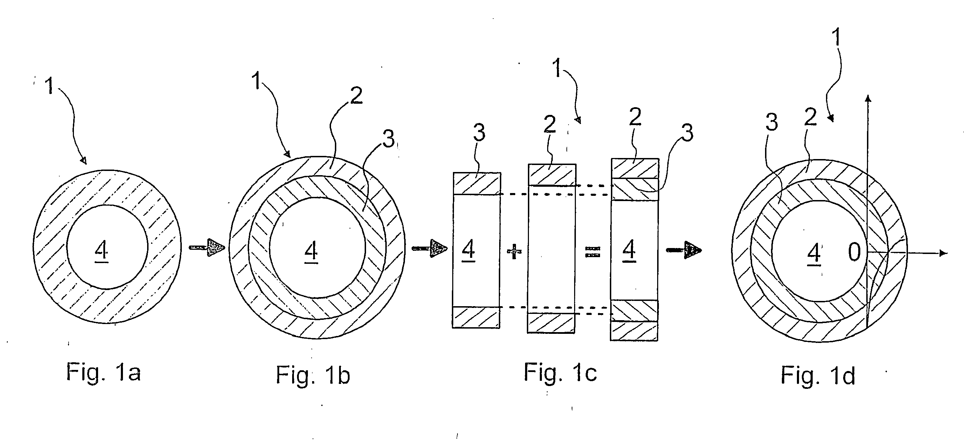

Bezug nehmend auf die Figuren 1a bis 1d ist ein stählernes Bauteil 1 eines Kraftstoffeinspritzsystemes für eine Brennkraftmaschine eines Kraftfahrzeuges im Querschnitt dargestellt, welches wenigstens annähernd rohrförmig ausgeführt ist. Es handelt sich vorliegend um einen gemeinsamen Druckspeicher (Rail) eines Dieseleinspritzsystemes.

Die Darstellung des Bauteiles 1 in Figur 1a entspricht dem Bauteil 1 vor der Beaufschlagung mit einem sogenannten Autofrettagedruck, der um ein vielfaches über einem maximalen Betriebsdruck liegt. Figur 1b stellt das Bauteil nach dem Aufbringen des Autofrettagedruckes dar. Beim Vergleich der beiden Darstellungen ist eine Veränderung bzw. Aufweitung des Innendurchmessers sowie des Außendurchmessers des Bauteiles 1 aufgrund des Autofrettagedmckes erkennbar, welche auf eine in radialer Richtung begrenzte, abschnittsweise teilplastische Verformung des Bauteiles 1 zurückzuführen ist.

Zum besseren Verständnis ist eine Wandung des Bauteiles 1 in Figur 1b durch zwei verschieden schraffierte Bereiche 2 und 3 dargestellt. Die Schraffuren dienen lediglich zur Darstellung der verschiedener Bereiche der Wandung des Bauteiles, welche einstückig ausgebildet ist. Der erste Bereich 2 der Wandung des Bauteiles ist jener Abschnitt der Wandung des Bauteiles 1, der während der Beaufschlagung des Bauteiles 1 in einem Innenraum 4 mit dem Autofrettagedruck eine elastische und reversible Verformung erfahren hat.

Der zweite Bereich 3, welcher den Innenraum bzw. Hohlraum 4 des Bauteiles 1 begrenzt und von dem ersten Bereich 2 vollständig umgeben ist, ist der Abschnitt der Wandung des Bauteiles 1, welcher nach dem Absenken des Autofrettagedruckes eine bleibende plastische bzw. irreversible Verformung aufweist, die sich in der Aufweitung des Durchmessers niederschlägt.

Die Autofrettage ist ein an sich bekanntes Verfahren zur Steigerung der Festigkeit von Bauteilen, die mit hohen zyklischen Drücken beaufschlagt werden. Während des Autofrettageprozesses werden durch ein einmaliges Aufbringen eines weit über einem Betriebsdruck eines Einspritzsystemes liegenden Reckdruckes bzw. Autofrettagedruckes gezielt Druckeigenspannungen in ein Bauteil eingebracht. Die Druckeigenspannungen werden dadurch erzeugt, daß Bereiche, welche einen Innenraum eines Bauteiles begrenzen, plastisch verformt werden und mithin nach der Autofrettage bleibende Verformungen bzw. Plastizierungen aufweisen. Die äußeren Bereiche eines Bauteiles weisen hingegen lediglich elastische Verformungen auf, welche sich nach dem Autofrettageprozeß teilweise wieder zurückbilden.

Durch die bereichsweise durchgeführte Plastizierung des Bauteiles im inneren Bereich 3 und.die lediglich elastische Verformung während des Autofrettageprozesses des äußeren Bereiches 2 liegt die in Figur 1c dargestellte Konstellation vor, daß ein Außendurclunesser des inneren Bereiches 3, welcher in Figur 1c zunächst in Alleinstellung gezeigt ist, nach dem Autofrettageprozeß größer ist als ein Innendurchmesser des ersten Bereiches 2. Im zusammengefügten Zustand wird der zweite bzw. innere Bereich 3 von dem äußeren bzw. ersten Bereich 2 zusammengedrückt und der äußere Bereich 2 von dem inneren Bereich 3 aufgeweitet, so daß sich in der Wandung des Bauteiles 1 der in Figur 1d dargestellte Spannungsverlauf einstellt. Der Spannungsverlauf verdeutlicht, daß im inneren Bereich 3 Druckeigenspannungen vorliegen.

Derartig bearbeitete Bauteile sind gegenüber nicht autofrettierten Bauteilen durch eine höhere mechanische Belastbarkeit gekennzeichnet. Somit sind autofrettierte Bauteile mit einem höheren maximalen Betriebsdruck beaufschlagbar als nicht autofrettierte Bauteile, da im Prinzip ein Druck in dem Innenraum des Bauteiles zunächst die Druckeigenspannungen egalisiert, und erst bei höheren Innendrücken Zugspannungen in dem inneren Bereich 3 auftreten, die bei unzulässig hohen Werten zu einem Versagen des Bauteiles 1 führen. Diese unzulässig hohen Werte werden jedoch erst bei wesentlich höheren Drücken erreicht als bei nicht autofrettierten Bauteilen.

Dadurch ergibt sich vorteilhafterweise die Möglichkeit, Bauteile mit geringeren Wandstärken auszuführen, wodurch die Herstellkosten sowie die Bauteilgewichte insbesondere eines Kraftstoffeinspritzsystemes reduziert werden können.

Vorliegend wird der Autofrettageprozeß bzw. das Verfahren zur Steigerung einer Dauerfestigkeit des Bauteiles 1 nach der Erfindung bei einer Bauteiltemperatur durchgeführt, die höher als eine Raumtemperatur ist, wobei vorliegend unter dem Begriff Raumtemperatur ein Temperaturbereich bis 30°C verstanden wird. Während der Druckbeaufschlagungsphase liegt die Bauteiltemperatur in Abhängigkeit des Werkstoffes des Bauteiles 1 in einem Temperaturbereich von 200°C bis 400°C, wobei eine Bauteiltemperatur der zu verfestigenden Abschnitte des Bauteiles 1 in einem Bereich von 250°C bis 350°C in Abhängigkeit des verwendeten Werkstoffes bevorzugt ist.

Eine Autofrettage des Bauteiles 1 bei den vorgenannten Bauteiltemperaturen führt zu einer weiter verbesserten Widerstandsfähigkeit bzw. Schwingfestigkeit des Bauteiles 1, da aufgrund der erhöhten Bauteiltemperatur der Effekt der sogenannten statischen Reckalterung begünstigt wird. Die plastische Verformung des inneren Bereiches 3 des Bauteiles 1 geht mit Versetzungen im Werkstoff einher, wobei durch erhöhte Temperatur gleichzeitig eine Diffusion von Fremdatomen im Werkstoff des Bauteiles 1 bewirkt wird.

Die erhöhte Bauteiltemperatur begünstigt die Diffusionseffekte von Fremdatomen im Werkstoffgefüge des Bauteiles 1, die eine Rückbildung der durch die plastische Verformung bewirk-ten Versetzungen im Werkstoffgefüge des Bauteiles 1, welche nach der Autofrettage die Druckeigenspannungen im Bauteil 1 verursachen, behindern.

Bei einer weiteren Variante des erfindungsgemäßen Verfahrens zur Steigerung einer Dauerfestigkeit eines mit einem während eines Betriebes mit einem schwankenden Innenhochdruck beaufschlagten Bauteiles ist es vorgesehen, den Autofrettageprozeß bei einer gegenüber einer Raumtemperatur höheren Bauteiltemperatur, d. h. in einem Bereich von 200°C bis 400°C, vorzugsweise in einem Bereich von 250°C bis 350°C, durchzuführen. Unmittelbar daran anschließend wird das Bauteil 1 während einer Temperaturbehandlungsphase 5 bis 20 Minuten lang, vorzugsweise in Abhängigkeit des verwendeten Werkstoffes maximal 10 Minuten lang, während der Temperaturbehandlungsphase auf einer Bauteiltemperatur von 200°C bis 400°C, vorzugsweise 250°C bis 3 50°C, gehalten, um die vorgenannten Effekte zu erzielen.

Insbesondere bei der Durchführung des Verfahrens bei erhöhter Bauteiltemperatur ist es vorgesehen, daß jene lokale Bereiche, welche hohen Belastungen durch stark wechselnde Betriebsdrücke ausgesetzt sind, vor der Beaufschlagung des Bauteiles mit dem Autofrettagedruck eine gewünschte Bauteiltemperatur aufweisen, so daß die vorgenannten Effekte sicher erzielt werden.

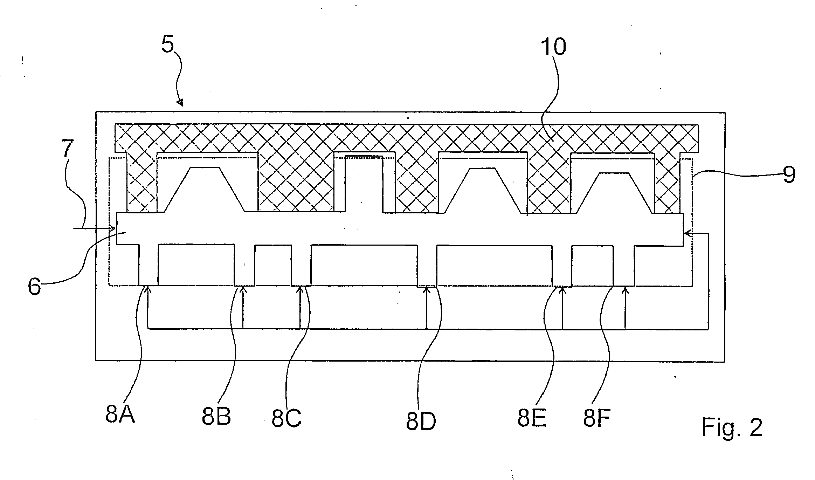

Die Figur 2 zeigt schematisch eine Fertigungseinrichtung 5, mittels der der Autofrettagedruck im Inneren des Bauteiles 1 aufgebracht wird. Das in Figur 2 dargestellte Bauteil stellt einen Hochdruck-Verteiler 6 (Rail) eines Kraftstoffeinspritzsystemes dar, über welchen alle Zylinder einer Brennkraftmaschine mit unter Hochdruck stehendem Kraftstoff versorgt werden.

Dabei werden die sehr hohen Drücke, die in einer Common-Rail-Anlage bzw. einem Kraftstoffeinspritzsystem eines Kraftfahrzeuges erzeugt werden, von einem regelbaren, gleichbleibendem Hochdruck in den Einspritzleitungen entkoppelt, um unterschiedliche Phasen der Einspritzung mit unterschiedlichen Anforderungen realisieren zu können. So soll beispielsweise gewährleistet sein, daß der volle Einspritzdruck von Beginn an zur Verfügung steht. Durch ein kurzes Voreinspritzen soll ein Temperaturanstieg in einem Bauraum sowie ein Spitzendruck vermindert werden und der Arbeitsdruck auf einen Kolben einer Brennkraftmaschine länger aufrechterhalten werden. Des weiteren soll eine "Härte" der Verbrennung und ein Verbrennungsgeräusch vorteilhafterweise reduziert werden.

Diese Anforderungen werden mit bekannten Common-Rail-Anlagen verwirklicht, bei welchen eine Einspritzmenge in bis zu fünf Teilmengen aufgespalten wird und die mit Einspritzdrücken von über 1600 bar betrieben werden.

Um die einzelnen Bauteile solcher Einspritzsysteme mit einer ausreichenden Dauerfestigkeit bei möglichst geringen Bauteilabmessungen ausführen zu können, werden die Bauteile mit dem Verfahren nach der Erfindung verfestigt. Dazu wird auf einer mit einem Pfeil 7 gekennzeichneten Seite des Hochdruck- Verteilers 6 ein nicht näher dargestellter Innenraum des Hochdruck-Verteilers 6 mit einem Autöfrettagedruck, der in Abhängigkeit des Werkstoffes des Hochdruck-Verteilers 6 z. B. 5000 bar bis 15000 bar annehmen kann, über eine Verschraubung oder durch eine andere geeignete hydraulische Abdichtung, beispielsweise einen Stopfen, zugeführt. Weitere Öffnungen 8A bis 8F des Hochdruck-Verteilers 6 werden gleichzeitig entweder durch Verschlußschrauben oder durch andere geeignete hydraulische oder mechanische Verschluß- bzw. Abdichteinrichtungen 11, die in der Zeichnung symbolisch durch Pfeile dargestellt sind, dichtend verschlossen.

Die Fertigungseimichtung 5 ist mit einer für eine Serienfertigung entsprechenden Handhabungstechnik ausgeführt, so daß beliebige Bauteile im Fertigungstakt automatisch zugeführt, hydraulisch verschlossen, autofrettiert und wieder entnommen werden können. Die Erwärmung des Hochdruck-Verteilers 6 bzw. die Einstellung einer Bauteiltemperatur des Hochdruck-Verteilers 6 erfolgt vorliegend in der Fertigungseinichtung 5 durch eine lediglich schematisch als strichlierte Linie wiedergegebene Heizeinrichtung 9, welche vorliegend als ein in die Fertigungseinrichtung 5 integrierter Ofen ausgeführt ist.

Alternativ hierzu kann es selbstverständlich auch vorgesehen sein, daß eine gewünschte Bauteiltemperatur zu verfesfigender Bauteile in der Fertigungseinrichtung über andere geeignete Heizeinrichtungen, wie beispielsweise auf Basis einer Widerstandserwärmung oder einer lokalen induktiven Erwärmung, eingestellt wird.

Um den Hochdruck-Verteiler 6 in der Fertigungseinrichtung 5 während des Autofrettageprozesses sowie während einer sich eventuell daran anschließenden Temperaturbehandlungsphase sicher zu positionieren und eine Verformung der Bauteile während der Autofrettage zu vermeiden, ist die Fertigungseinrichtung 5 mit einer an die Kontur des jeweils zu verfestigenden Bauteiles anpaßbaren Abstützungseinrichtung 10 ausgeführt.

In einer weiteren Ausführungsform der Erfindung kann es vorgesehen sein, daß vor der Druckbeaufschlagungsphase die Bauteiltemperatur während einer Temperaturbehandlungsphase auf einen werkstoffabhängigen vordefinierten Wert eingestellt wird, bei dem eine teilplastische Verformung in während eines Betriebes hochbelasteten Bereichen des Bauteiles durch Anlegen eines Autofrettagedruckes erzeugt wird, wohingegen in Bereichen des Bauteiles, die während eines normalen Betriebes weniger belastet sind, keine teilplastische Verformung erzeugt wird.

Des weiteren kann es vorgesehen sein, daß die Bauteiltemperatur lediglich in jenen Bereichen erhöht wird, in welchen die Bauteile zur Erzeugung von Druckeigenspannungen teilplastisch verformt werden und die anderen Bereiche des Bauteiles weniger stark oder überhaupt nicht erwärmt werden.

## Patentansprüche

1. Verfahren zur Steigerung einer Dauerfestigkeit eines mit wenigstens einem Hohlraum (4) ausgebildeten metallischen Bauteiles (1), insbesondere eines Bauteiles eines Kraftstoffeinspritzsystems eines Kraftfahrzeuges, bei welchem das Bauteil (1) in seinem Hohlraum (4) während einer Druckbeaufschlagungsphase mit einem derartigen Druck beaufschlagt wird, dass das Bauteil (1) wenigstens abschnittsweise zur Erzeugung von Druckeigenspannungen im Bauteil (1) teilplastisch verformt wird, **dadurch gekennzeichnet, dass**
vor der Druckbeaufschlagungsphase zumindest eine Temperaturbehandlungsphase durchgeführt wird, bei der das Bauteil (1) auf eine Bauteiltemperatur höher als eine Raumtemperatur erwärmt wird und dann die Bauteiltemperatur derart eingestellt wird, dass diese während der Druckbeaufschlagungsphase auf 200°C bis 400°C gehalten wird.

2. Verfahren nach Anspruch 1,
**dadurch gekennzeichnet, dass**
vor und nach der Druckbeaufschlagungsphase eine Temperaturbehandlungsphase durchgeführt wird.

3. Verfahren nach Anspruch 2,
**dadurch gekennzeichnet, dass**
eine Bauteiltemperatur während der beiden Temperaturbehandlungsphasen gleich ist.

4. Verfahren nach Anspruch 2,
**dadurch gekennzeichnet, dass**
eine Bauteiltemperatur während der beiden Temperaturbehandlungsphasen verschieden ist.

5. Verfahren nach einem der Ansprüche 1 bis 4,
**dadurch gekennzeichnet, dass**
eine Bauteiltemperatur während einer Temperaturbehandlungsphase derart eingestellt wird, dass während der Druckbeaufschlagungsphase verursachte Diffusionsprozesse im Bauteil (1) begünstigt werden.

6. Verfahren nach einem der Ansprüche 1 bis 5,
**dadurch gekennzeichnet, dass**
während einer Temperaturbehandlungsphase eine Bauteiltemperatur werkstoffabhängig auf 200°C bis 400°C eingestellt wird.

7. Verfahren nach Anspruch 6,
**dadurch gekennzeichnet, dass**
die Bauteiltemperatur auf 250°C bis 350°C eingestellt wird.

8. Verfahren nach einem der Ansprüche 1 bis 7,
**dadurch gekennzeichnet, dass**
die Dauer einer Temperaturbehandlungsphase werkstoffabhängig maximal 10 Minuten beträgt.

9. Verfahren nach einem der Ansprüche 1 bis 8,
**dadurch gekennzeichnet, dass**
eine Bauteiltemperatur während einer Temperaturbehandlungsphase durch eine Widerstandserwärmung eingestellt wird.

10. Verfahren nach einem der Ansprüche 1 bis 9,
**dadurch gekennzeichnet, dass**
eine Bauteiltemperatur durch eine lokale induktive Erwärmung des Bauteiles eingestellt wird.

## Claims

1. Method for increasing the fatigue strength of a metallic component (1) which is formed with at least one cavity (4), in particular of a component of a fuel injection system of a motor vehicle, in which method, during a pressurization phase, the component (1) is subjected in its cavity (4) to such a pressure that the component (1) undergoes partially plastic deformation at least in sections in order to produce residual compressive stresses in the component (1),
**characterized in that**
the pressurization phase is preceded by at least one heat-treatment phase, in which the component (1) is heated to a component temperature higher than room temperature and then the component temperature is set in a manner such that it is held at 200°C to 400°C during the pressurization phase.

2. Method according to Claim 1,
**characterized in that**
a heat-treatment phase is carried out before and after the pressurization phase.

3. Method according to Claim 2,
**characterized in that**
the component temperature is the same during the two heat-treatment phases.

4. Method according to Claim 2,
**characterized in that**
the component temperature is different during the two heat-treatment phases.

5. Method according to one of Claims 1 to 4,
**characterized in that**
the component temperature is set during a heat-treatment phase in a manner such as to promote diffusion processes in the component (1) brought about during the pressurization phase.

6. Method according to one of Claims 1 to 5,
**characterized in that**
the component temperature is set to 200°C to 400°C, depending on the material, during a heat-treatment phase.

7. Method according to Claim 6,
**characterized in that**
the component temperature is set to 250°C to 350°C.

8. Method according to one of Claims 1 to 7,
**characterized in that**
a heat-treatment phase lasts for at most 10 minutes, depending on the material.

9. Method according to one of Claims 1 to 8,
**characterized in that**
the component temperature is set during a heat-treatment phase by means of resistance heating.

10. Method according to one of Claims 1 to 9,
**characterized in that**
the component temperature is set by means of local inductive heating of the component.

## Revendications

1. Procédé pour augmenter la résistance à la fatigue d'un composant métallique (1) réalisé avec au moins une cavité (4), notamment d'un composant d'un système d'injection de carburant d'un véhicule automobile, dans lequel le composant (1) est sollicité dans sa cavité (4) pendant une phase de sollicitation en pression, avec une pression telle que le composant (1) subisse au moins en partie une déformation partiellement plastique pour produire des contraintes de pression propres dans le composant (1),
**caractérisé en ce que**
l'on met en oeuvre avant la phase de sollicitation en pression au moins une phase de traitement thermique, dans laquelle le composant (1) est chauffé à une température de composant supérieure à une température de la pièce, et la température du composant est alors ajustée de telle sorte que celle-ci soit maintenue pendant la phase de sollicitation en pression dans une plage de 200°C à 400°C.

2. Procédé selon la revendication 1,
**caractérisé en ce que**
l'on met en oeuvre une phase de traitement thermique avant et après la phase de sollicitation en pression.

3. Procédé selon la revendication 2,
**caractérisé en ce que**
la température du composant est la même pendant les deux phases de traitement thermique.

4. Procédé selon la revendication 2,
**caractérisé en ce que**
la température du composant est différente pendant les deux phases de traitement thermique.

5. Procédé selon l'une quelconque des revendications 1 à 4,
**caractérisé en ce que**
l'on ajuste une température du composant pendant une phase de traitement thermique de manière à favoriser des processus de diffusion provoqués pendant la phase de sollicitation en pression dans le composant (1).

6. Procédé selon l'une quelconque des revendications 1 à 5,
**caractérisé en ce que**
l'on ajuste une température du composant en fonction du matériau pendant une phase de traitement thermique dans une plage de 200°C à 400°C.

7. Procédé selon la revendication 6,
**caractérisé en ce que**
la température du composant est ajustée à une plage de 250°C à 350°C.

8. Procédé selon l'une quelconque des revendications 1 à 7,
**caractérisé en ce que**
la durée d'une phase de traitement thermique en fonction du matériau est au maximum de 10 minutes.

9. Procédé selon l'une quelconque des revendications 1 à 8,
**caractérisé en ce que**
l'on ajuste une température du composant pendant une phase de traitement thermique par un chauffage par résistance.

10. Procédé selon l'une quelconque des revendications 1 à 9,
**caractérisé en ce que**
l'on ajuste une température du composant par un chauffage local par induction du composant.
